# EUROPEAN PATENT SPECIFICATION

(11) **EP 3 642 526 B1**
(45) Date of publication and mention of the grant of the patent: **18.05.2022**
(21) Application number: 18733692.0
(22) Date of filing: 13.06.2018
(51) Int. Cl.: F16L 55/054, E03F 5/04, E03F 9/00, E03B 7/07, E03F 1/00, E04D 13/04

(54) **COMPONENT OF A SYSTEM FOR THE DRAINAGE OF RAINWATER IN UNDERPRESSURE, AS WELL AS A PIPE PIECE AND ROOF DRAIN OF SUCH SYSTEM CONSTITUTING SAID COMPONENT**
BAUTEIL EINES REGENWASSERDRAINAGESYSTEMS IM UNTERDRUCK SOWIE ROHRSTÜCK UND DACHABLAUF EINES SOLCHEN SYSTEMS ZUR BILDUNG DIESES BAUTEILS
COMPOSANT D'UN SYSTÈME DE DRAINAGE D'EAU DE PLUIE EN SOUS-PRESSION, ET TUYAU ET DRAIN DE TOIT D'UN TEL SYSTÈME FORMANT LEDIT COMPOSANT

(30) Priority: 19.06.2017 BE 201705434
(43) Date of publication of application: 29.04.2020
(73) Proprietor: Aquadraat Engineering Bvba, 2520 Ranst (BE)
(72) Inventor: FIERLAFIJN, Johan, 2110 Wijnegem (BE)
(74) Representative: Van hunsel, Lieven M.S.
(86) International application number: PCT/IB2018/054309
(87) International publication number: WO 2018/234939

(56) References cited:
- EP-A1- 2 423 407
- WO-A1-2010/067909
- DE-A1- 3 301 332
- DE-A1-102004 031 476
- DE-A1-102012 024 358

## Description

Component of a system for the drainage of rainwater in underpressure, as well as a pipe piece and roof drain of such system constituting such component.

The present invention first and foremost relates to a component of a system for the drainage of rainwater in underpressure.

Systems for the drainage of rainwater in underpressure are also called siphonic roof drainage systems or UV-rainwater drainage systems, whereby UV stands for the Finnish Umpi Virtaus, which means "closed flow".

In systems for the drainage of rainwater, rainwater that falls on a roof, is led away via one or several openings in the roof or in a roof gutter to a drain pipe which is connected to a suitable drainage system.

In conventional rainwater drainage systems, the rainwater is led away by the drain pipe, in free fall as it were.

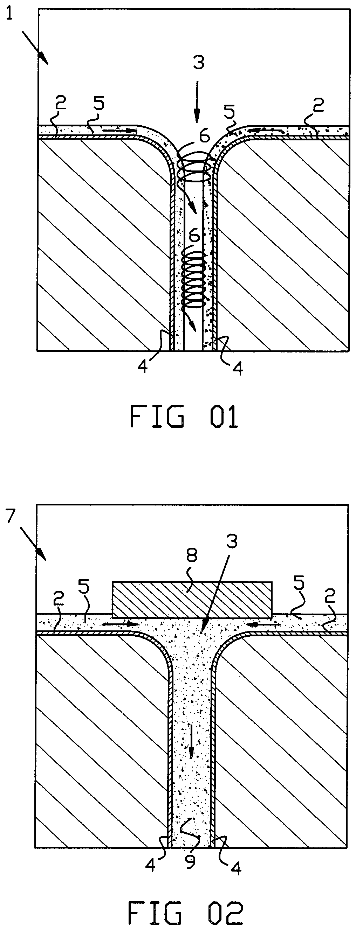

As illustrated in figure 1, there is also air suction, which hinders a rapid drainage of the rainwater in the drain pipes.

In underpressure rainwater drainage systems, referred to as underpressure systems in short, the drainage of the rainwater through the drain pipe is additionally powered by the underpressure created when air suction at the top of the drain pipe is prevented.

Air suction is prevented by applying so-called roof drains on the roof on the level of the drain openings.

Via the roof drains the rainwater is led to horizontally extending collector pipes which in turn end in a vertical down pipe.

As soon as the whole down pipe is filled with rainwater and thus a vertical water column is formed, the drainage system is primed, or, in other words, we speak of a UV rainwater drainage system that is started.

In said situation the mass of the water column in the UV rainwater drainage system does indeed cause an underpressure, such that rainwater is sucked in and can be led away at high speeds.

This is illustrated by way of example in figure 2.

A big advantage of a system for the drainage of rainwater in underpressure is that the dimensions of the drainpipes can be kept smaller and less drainpipes and openings need to be made in the roof than with conventional rainwater drainage systems.

In short, the drainage of rainwater can be done more efficiently with a UV rainwater drainage system.

A drawback of the known systems for the drainage of rainwater in underpressure is that the supply pipes need to be made with various diameters.

A criterion to realise a good flow in such UV rainwater drainage system, is indeed that in places where drainpipes come together the conditions in the arriving liquid need to be the same.

However, it is generally known that the flow of a liquid in a pipe is linked with friction losses (also called load losses), whereby less friction loss occurs as a pipe with a greater diameter is applied.

In short, it is necessary to ensure that rainwater which is led via a relatively long route to a certain point in the drainage system goes through pipes with a relatively big diameter, whereas rainwater that is led to that same point in the drainage system can pass via a relatively shorter route through pipes with a relatively smaller diameter, so that it arrives with the same energy.

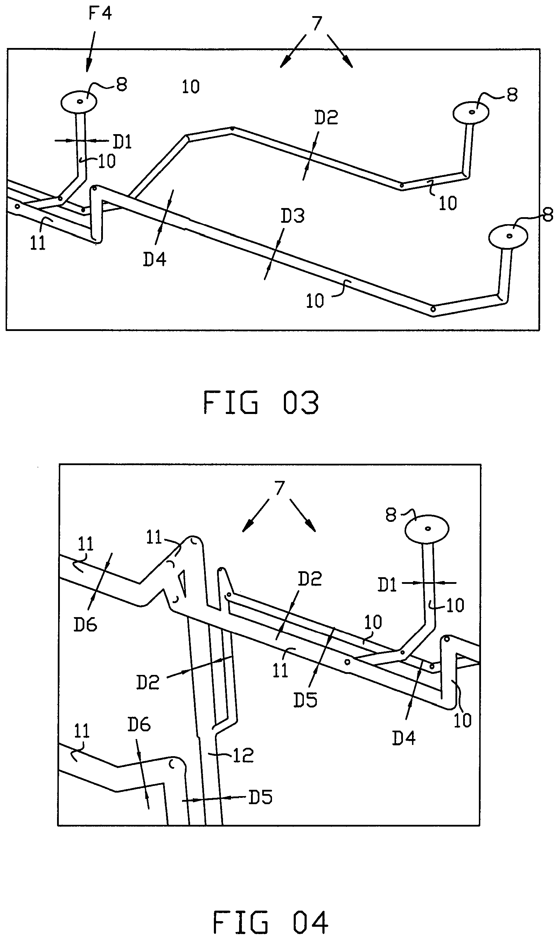

The application of pipes with different diameters is illustrated in figures 3 and 4.

A major drawback of the known systems for the drainage of rainwater in underpressure is therefore that the design and the calculation of the applicable diameters are complicated.

Another drawback of the known systems for the drainage of rainwater in underpressure is that many different components with different dimensions and diameters are used, such that a large variety of products, such as pipes and connecting pieces, need to be produced and stocked.

Moreover, the installation of such known system for the drainage of rainwater in underpressure needs to be precisely according to the design, which is clearly much more complicated than with the conventional rainwater drainage systems, whereby use is made of pipes the diameters of which are not so diverse.

Another drawback of the known systems for the drainage of rainwater in underpressure is that it is very complicated or as good as impossible to adapt such a rainwater drainage system at a later stage by adding a roof drain and accompanying pipe, for example to solve a discovered lack of drain capacity after the installation.

DE102012024358 discloses a dewatering device that is provided with a safety overflow so as to prevent exit of water that falls through a tube piece.

The purpose of the present invention is therefore to provide a solution for one or several of the aforesaid or possible other disadvantages.

More specifically, a purpose of the invention is to provide a solution which strongly simplifies the design of a system for the drainage of rainwater in underpressure, as well as the installation thereof.

Another purpose of the invention is to restrict the need of components of various dimensions for a system for the drainage of rainwater in underpressure as much as possible.

Yet another purpose of the invention is a system for the drainage of rainwater in underpressure which continues to drain rainwater at high speed in very varying circumstances and which after installation is still easily adaptable.

It is also a purpose of the invention to provide a solution for systems for the drainage of rainwater in underpressure which is maintenance friendly by ensuring that no or little maintenance is necessary or that components which do require such maintenance are easily accessible.

To this end, the invention relates to a component of a system for the drainage of rainwater in underpressure, wherein the component is provided with control means suitable to control the flow rate through a drainpipe of the system for the drainage of rainwater in underpressure, wherein the component itself comprises at least a part of a drainpipe or pipe piece, wherein the component optionally comprises a part of a roof drain, which roof drain comprises an air shutoff member, wherein the control means are integrated partially or entirely in said part of a drainpipe or pipe piece and/or partially or entirely in a part of said roof drain, whereby the control means are such that they allow the flow rate through said part of the drainpipe or pipe piece concerned to be increasingly reduced as and when an underpressure in said part of the drainpipe or pipe piece concerned becomes greater and/or as and when the flow speed in said part of the drainpipe or pipe piece increases and vice versa, and whereby the control means comprise at least one movable or deformable control element intended to come into direct contact during operation with the drained away rainwater and whereby a movement or deformation of the control element which determines its position is the direct consequence of this contact with the drained away rainwater.

Such component according to the invention is very advantageous, as the component controls the flow rate in a drainpipe of the system for the drainage of rainwater in underpressure, such that the rainwater drainage system starts faster or is primed sooner.

Generally speaking, in systems for the drainage of rainwater in underpressure, which are equipped with components according to the invention, the connecting pipes of the UV roof drains under atmospheric pressure or gravity flow can be made with greater flow diameters, such that they are simpler to maintain, block less easily and ensure a faster start up or priming of the system.

This is because due to the greater diameters of the connecting pipes subject to gravity flow, the horizontal UV collector pipes fill up faster such that the down pipe can be primed faster.

In a preferred embodiment of a component according to the invention, the control means allow the flow rate through the drainpipe concerned to be changed by making the dimensions of the flow-through opening of the drainpipe concerned or a supply thereto smaller or by changing the shape of this flow-through opening.

Such embodiment of a component according to the invention has the major advantage that it is easy to realise and this even in a self-adjusting way without unnecessarily complicated adjusters having to be provided, which is illustrated hereinafter in more detail.

In a possible embodiment of a component according to the invention, the control means comprise at least one movable or deformable control element which essentially is formed by at least one of the following elements:
- a movable flap;
- a movable sheet;
- a membrane;
- an elastic deformable element; or,
- a piston in a cylinder.

Every one of said embodiments of a component according to the invention has its advantages, whereby on the one hand, for example in an embodiment with a movable flap or piston, the position of the control element and the accompanying flow rate in the drainpipe can be determined beforehand reasonably easily and correctly, which is not evident in an embodiment with an elastic membrane.

On the other hand, an embodiment with an elastic membrane has the advantage that it is very maintenance friendly, because there are no mechanical components.

According to the invention, the control means are provided with at least one movable or deformable control element which is intended to come into direct contact during operation with the drained away rainwater and whereby a movement or deformation of the control element which determines the position thereof is the direct consequence of this contact with the drained away rainwater.

The major advantage of such a component according to the invention is that it is effectively self-adjusting, whereby parts thereof increasingly reduce the flow rate in the drainpipe concerned because these parts take up another position in the drainpipe at an increasing underpressure and/or an increasing flow rate in the drainpipe or vice versa and this merely based on the contact of the component with the running rainwater.

Such component according to the invention also has the advantage that it is very maintenance friendly to manufacture, whereby no or hardly any maintenance is necessary.

In a very preferred embodiment of a component according to the invention said control element is essentially formed by a deformable or elastic membrane that covers and hermetically seals an opening or cavity in a wall section, whereby a contact side of the membrane during operation is intended to come into contact with the drained away rainwater and the other side of the membrane is in contact with a medium present in a hollow, closed space which is delimited by the membrane and said wall section.

Such embodiment of a component according to the invention is very efficient as it can be easily installed in a system for the drainage of rainwater in underpressure and thereafter automatically controls the flow rate in the drainpipe concerned without additional means.

The membrane hereby automatically deforms under the effect of the prevalent underpressure in the drainpipe and preferably the design is such that the level of deformation corresponds with the desired reduction or increase of the flow rate in the drainpipe as the case may be.

In a special embodiment which will be clarified based on the figures, the component is additionally provided with adjustment means with which the initial condition and the level of deformation of the membrane during operation can be adjusted.

Moreover, it is clear that such embodiment of a component according to the invention with membrane barely requires any or no maintenance.

In yet another embodiment of a component according to the invention, control engineering techniques can be applied, whereby electronic, mechanical or hydraulic components can be used for the composition of the control means.

In such embodiment of a component according to the invention, the control means can, for example, comprise one or several of the following elements:
- a measuring instrument to measure the flow rate through a drainpipe or a roof drain of the system for the drainage of rainwater in underpressure concerned;
- a measuring instrument to measure the underpressure in a drainpipe or a roof drain of the system for the drainage of rainwater in underpressure concerned;
- an electronic control unit to manage the control means as a function of measurements made with a measuring instrument in a drainpipe or a roof drain of the system for the drainage of rainwater in underpressure concerned; and/or,
- an actuator to change the flow-through opening of a drainpipe of the system for the drainage of rainwater in underpressure concerned or of the flow-through opening of a supply thereof.

Such embodiment of a component according to the invention is of course more complicated, but it allows solutions to be offered with more known techniques or in applications where with simpler means alone it appears not possible.

The invention also relates to a pipe piece that constitutes a component of a system for the drainage of rainwater in underpressure according to the invention, as already described above.

The special characteristic of such pipe piece according to the invention is that it has a pipe wall in which a channel, opening or cavity is provided which on the inside of the pipe piece is hermetically covered by a membrane to form said control means and whereby a wall section connects to the channel or opening or whereby a wall section forms the cavity such that this wall section, together with the membrane, encloses a hollow, closed space.

Such embodiment of a pipe piece according to the invention of course has the advantage that it can be easily installed without additional elements during the installation of a system for the drainage of rainwater in underpressure and can immediately fulfil its function as flow rate controlling component of the system.

Moreover, the invention relates to a roof drain which forms a component according to the invention of a system for the drainage of rainwater in underpressure.

The special characteristic of such roof drain is that the roof drain contains an air shutoff member in the form of a cover whereby, to form a hollow, closed space, centrally in the cover, a hollow, sealable tube is provided which extends perpendicular to the cover, whereby in the tube wall one or several passages are provided, whereby over the hollow tube a balloon-shaped membrane is applied which at its edges is hermetically connected with the outside of the tube wall, whereby the membrane covers said passage or passages and whereby by creating an underpressure outside the membrane in relation to the pressure in the hollow closed space, the balloon-shaped membrane can blow up to increase the volume of the hollow space.

The major advantage of such roof drain according to the invention is that the roof drain can control the flow rate of a drainpipe connected to the roof drain of a system for the drainage of rainwater in underpressure by increasing or decreasing the volume of the hollow space and thus decrease and increase respectively the dimensions of the flow-through opening.

Such roof drain according to the invention is also very easily accessible on the roof, for example for inspection or maintenance and the like.

Another major advantage of the application of the aforementioned embodiments of a component according to the invention is that pipes can be used with the same diameter, as the control means automatically adapt the dimensions of the flow-through opening to the desired dimension in which flow in underpressure takes place.

Consequently, it is much easier to design a system for the drainage of rainwater in underpressure with such components according to the invention and the installation thereof is equally simple and can be done by any subcontractor who is also able to install a conventional rainwater drainage system.

Another advantage of the application of components according to the invention resulting from this, is that only a limited number of types of such components and types of other components are needed to be able to realise any installation.

That also implies an enormous cost reduction.

With the intention of better showing the characteristics of the invention, hereinafter, by way of an example without any limiting nature, a number of preferred embodiments are described of a component of a system for the drainage of rainwater in underpressure according to the invention, as well as a pipe piece and a roof drain according to the invention constituting such component, with reference to the accompanying drawings, wherein:
figures 1 and 2 respectively illustrate the operation of a conventional rainwater drainage system and a system for the drainage of rainwater in underpressure;
figure 3 shows a perspective view of a part of a known system for the drainage of rainwater in underpressure;
figure 4 shows a perspective view on a larger scale and with additional parts according to arrow F4 in figure 3;
figure 5 in cross-section shows a first embodiment of a component according to the invention, more specifically in an embodiment as a pipe piece according to the invention;
figures 6 to 11 in cross-section in a similar way show other embodiments of such component according to the invention which is made as a pipe piece according to the invention;
figures 12 and 13 in cross-section again illustrate a component according to the invention, which is made as a pipe piece according to the invention, in a first position and a second position respectively;
figures 14 and 15 show a perspective view and with representation of invisible parts in dotted line, of a component according to the invention, which is made as a pipe piece according to the invention, in a first and a second position respectively;
figures 16 and 17 are cross-sections, according to the planes indicated with the arrows F16 in figure 14 and the arrows F17 in figure 15 respectively;
figures 18 and 19 are cross-sections, according to the planes indicated with the arrows F18 in figure 16 and the arrows F19 in figure 17 respectively; and,
figure 20 in cross-section shows a component according to the invention that is made as a roof drain according to the invention.

Figure 1 shows a part of a conventional rainwater drainage system 1, whereby in a roof 2 an opening 3 is provided to which a drainpipe 4 is connected.

The rainwater 5 falls in free fall as it were through the drainpipe 4 whereby there is air 6 suction, which is disadvantageous for an efficient drainage of the rainwater 5.

Figure 2 shows a part of a system for the drainage of rainwater in underpressure 7 whereby this time on the level of the opening 3 in the roof 2, a UV roof drain or a roof drain with air shutoff member 8 has been installed which avoids the suction of air 6 via the drainpipe 4.

In case of sufficient rainfall, a vertical column of rainwater 9 is formed in the drainpipe 4 and the system for the drainage of rainwater in underpressure 7 is started, whereby the mass of the vertical column of rainwater 9 strongly stimulates the drainage of the rainwater 5.

An underpressure is created in the drainpipe 4, more specifically a pressure that is lower in the drainpipe 4 than the atmospheric pressure in the surroundings, and the rainwater 5 is therefore drained at much higher speeds than in a conventional rainwater drainage system 1.

Figures 3 and 4 schematically illustrate a more realistic set-up of a system for the drainage of rainwater in underpressure 7.

Several UV roof drains 8 are connected hereby via a connecting pipe 10 to one or several horizontally extending collector pipes 11 which drain the rainwater 5 to one or several vertically extending down pipes 12.

As illustrated in figure 4, a UV roof drain 8 can also be directly connected to a down pipe 12.

To ensure that the same pressure loss occurs in every route that the rainwater 5 can follow to a particular point in the system for the drainage of rainwater in underpressure e 7, the connecting pipes 10, as well as the different collector pipes 11, the down pipe 12 and separate parts thereof, need to be made with very varied diameters D1 to D6, as do the different collector pipes 11.

It is clear that such system for the drainage of rainwater in underpressure 7 requires a precise design, that many different components with very varied dimensions need to be used, that the installation is very difficult and can easily result in mistakes, and the like.

A solution is offered to these problems with a component 13 according to the invention which is intended for application in such system for the drainage of rainwater in underpressure 7.

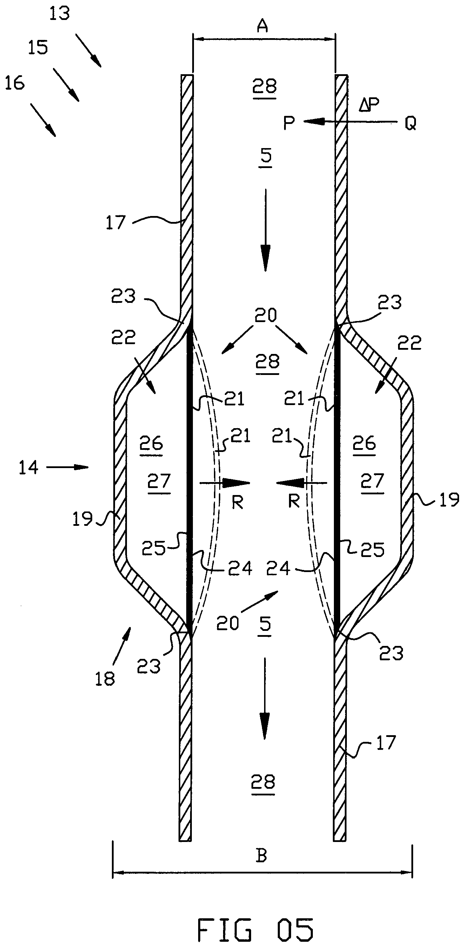

A first possible embodiment of such component 13 according to the invention is shown in figure 5.

Such component 13 according to the invention is special, because it is provided with control means 14 to control the flow rate through a drainpipe 4 of the system for the drainage of rainwater in underpressure 7.

The control means 14 are such that they allow the flow rate through the drainpipe concerned 4 to be increasingly reduced as and when an underpressure ΔP in relation to the atmospheric pressure Q in the drainpipe concerned 4 becomes greater or as the flow speed in the drainpipe 4 increases and vice versa.

For the sake of clarity, underpressure ΔP refers to the pressure difference between the atmospheric pressure Q and the pressure P in the drainpipe 4 (ΔP = Q-P).

In the example of figure 5 the component 13 itself comprises a part 15 of a drainpipe 4 of the system for the drainage of rainwater in underpressure 7 in which the control means 14 are integrated.

Indeed, the component 13 is made as a pipe piece 16 with which a drainpipe 4 of the system for the drainage of rainwater in underpressure 7 can be composed.

The pipe piece 16 has a cylindrical wall 17 with diameter A, whereby centrally in the pipe piece 16 a wider part 18 is provided, formed by a wall section 19 with a diameter B which is greater than diameter A.

Moreover, the control means 14 contain a control element 20 that is movable and deformable and in the example shown is essentially formed by a deformable or elastic membrane 21 that covers a cavity 22, formed by the wall section 19 of the wider part 18.

The membrane 21 can, for example, be made of a rubber or any synthetic material that has elastic properties.

The membrane 21 is connected with the cylindrical wall 17 on the edges 23 of the cavity 22 and hermetically seals the cavity 22.

In a non-load, non-deformed condition, the membrane 21 can be cylindrical which corresponds with the case whereby the wider part 18 extends over 360°, i.e. around the whole contour of the pipe piece 16.

In other embodiments, the wider part 18 can only extend over a fraction of the contour of the pipe piece 16 and the membrane 21 in the non-load, non-deformed condition, has the form of a fraction of a cylinder.

Obviously, according to the invention, pipe pieces 16 and wider parts 18 with completely different shapes and cross-sections can be applied and with membranes 21 adapted to these shapes.

A contact side 24 of the membrane 18 is intended to come into direct contact with the drained away rainwater 5 in the pipe piece 16 during operation.

The other side 25 of the membrane 18 is in contact with a medium 26 that is present in the cavity 22, more specifically in a hollow, closed space 27 which is delimited by the membrane 21 and the wall section 20.

Preferably this medium 26 is a gas, but it can also be a liquid or solid material or a combination of all this and the medium 26 can be put under pressure in the cavity 22 and the like.

When in the pipe piece 16 there is a pressure P that is equal to the atmospheric pressure Q (i.e. when there is no underpressure ΔP), the membrane 21 and the medium 26 in the closed, hollow space 27 are preferably adjusted thus that it extends in the extension of the cylindrical wall 17.

Thus, the membrane 21 in this condition in no way whatsoever forms any additional obstruction for the flow of rainwater 5 through the pipe piece 16.

Furthermore, the control means 14 are such that they allow the flow rate through the drainpipe concerned 4 to be changed by altering the dimensions of the flow-through opening 28 of the drainpipe concerned 4.

More specifically in this case, with an increasing underpressure ΔP, in other words when the pressure P in the pipe piece 16 drops in relation to the atmospheric pressure Q, the membrane 21 will deform and move in the direction indicated by the arrows R toward the centre of the pipe piece 16.

Accordingly, the flow-through opening 28 of the pipe piece 16 is decreased, such that the flow rate through the pipe piece 16 drops too.

When the underpressure ΔP drops again, the opposite occurs.

The position or shape of the membrane 21 is immediately determined by the size of the underpressure ΔP without intervention of additional means.

It is clear that with such component 13 according to the invention, an automatic control of the flow rate through the pipe piece 16 is obtained, which allows a system for the drainage of rainwater in underpressure 7 to be effectively kept in underpressure as well, as was put forward in the introduction.

Moreover, it is trivial that the component 13 is very simple to manufacture, can be installed without any problem and hardly requires any or no maintenance.

In the embodiment of figure 5, said wall section 19 which delimits the cavity 26 is at least partially part of the cylindrical wall 17 of the pipe piece 16 which is intended to be part of a drainpipe 4 of the system for the drainage of rainwater in underpressure 7 concerned.

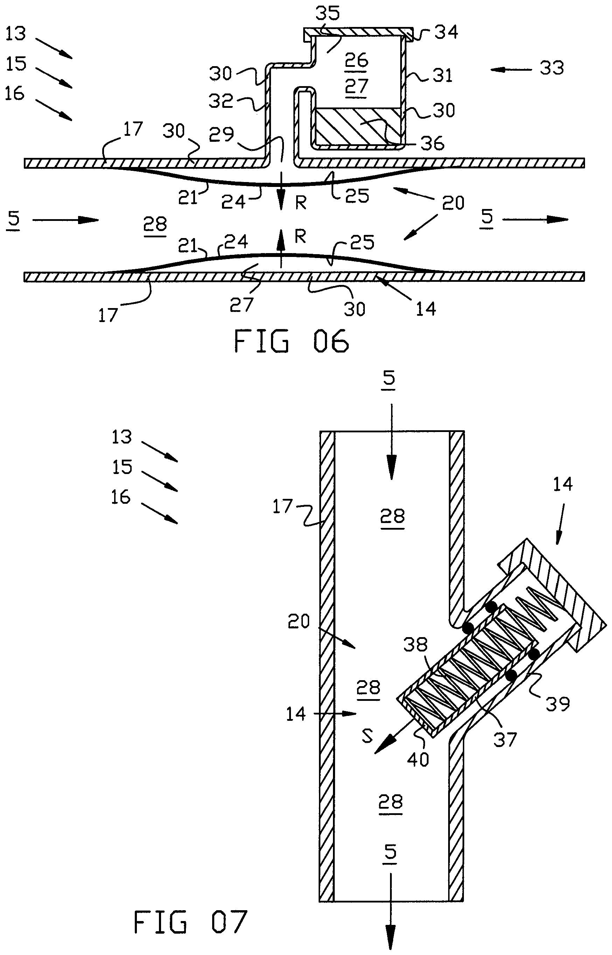

Figure 6 shows another embodiment of a component 13 according to the invention which shows many similarities with the embodiment of figure 5.

However, in this case the membrane 21 is applied over an opening 29 in the cylindrical wall 17 whereby the side 25 of this membrane is in contact with a medium 26 in a hollow, closed space 27.

This hollow closed space 27 is somewhat different, as it is delimited by the membrane 21 and by a wall section 30 that forms a control vessel 31 and is connected via a channel 32 to the opening 29.

To be able to adjust the condition in the hollow, closed space 27, adjustment means 33 are preferably provided according to the invention.

In the embodiment of figure 6 these adjustment means 33 comprise a sealable cover 34 that provides access to the hollow, closed space 27 in the control vessel 31 for adding or removing medium 26.

The intention here is to be able to change the quantity of gaseous medium 35 and/or liquid or solid medium 36 in order to adjust the initial condition in the hollow, closed space 27, more specifically when an atmospheric pressure Q is prevalent on the contact side 24 of the membrane 21.

Figure 7 shows another embodiment of a component according to the invention which also contains a part 15 of a drainpipe 4 and which more specifically is made again as a pipe piece 16.

However, in this embodiment the control element 20 of the control means 14 is essentially formed by a piston 37 which is movable backward and forward in a cylindrical tube piece 38 which extends laterally on the cylindrical wall 17 of the pipe piece 16.

The head 39 or a part near the head 39 of the piston 37 is intended to come into contact with the drained away rainwater 5 during operation.

Furthermore, the piston 37 is powered by a spring 38 applied in the cylindrical lateral tube piece 39.

With an increase of the underpressure ΔP or therefore a drop of the pressure P in the pipe piece 16 the piston 37 moves in an outward direction out of the cylindrical tube piece 39, indicated with the arrow S.

The head 40 of the piston 37 in this way makes the flow-through opening 28 in the pipe piece 16 smaller, such that in this embodiment the flow rate through the pipe piece 16 decreases as well.

In the event of a drop of the underpressure ΔP, exactly the opposite occurs.

It is clear that such embodiment has essentially the same operation as the previous embodiments of a component 13 according to the invention.

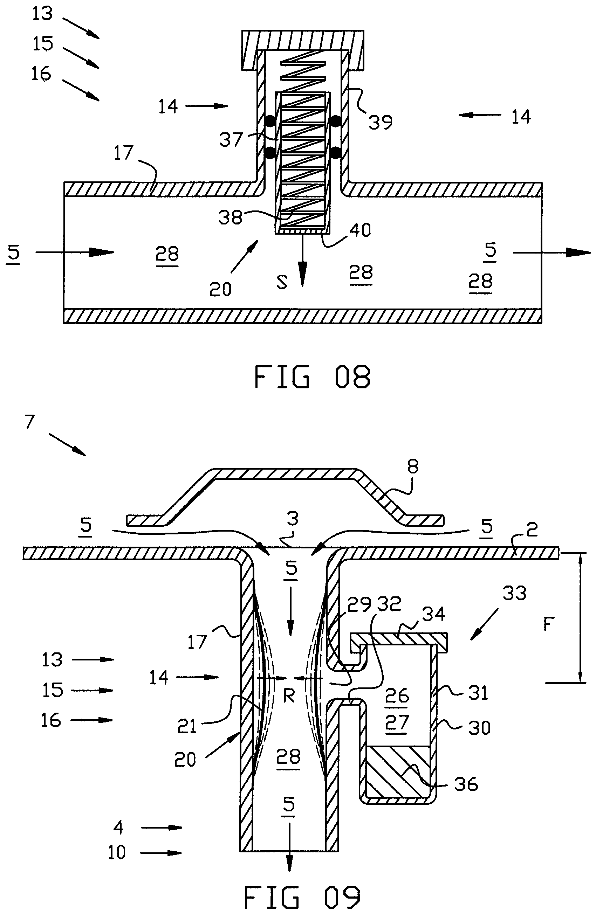

In figure 8 a similar embodiment of a component 13 according to the invention is shown, whereby this time the cylindrical tube piece 39 in which the piston 37 can move backward and forward extends perpendicular to the wall 17 of the pipe piece 16 and not at an angle as is the case in figure 7.

This doesn't result in any essential changes in the operation of the component 13.

Figure 9 shows another embodiment of a component 13 according to the invention which is practically identical to the embodiment of figure 6.

In this figure 9 the component 13 is still made as a pipe piece 16, whereby this time this pipe piece 16 is intended to be placed vertically, whereas a pipe piece according to an embodiment shown in figure 6 is suitable for a horizontal installation.

As can be deducted from the figures, this change requires another orientation of the control vessel 31 and the sealable cover 34 thereof in relation to the direction in which the pipe piece 16 extends.

A pipe piece 16 according to the embodiment of figure 9 has the advantage that it can be installed in a vertical part of a drainpipe 4 that connects with an opening in the roof 2 close to the roof drain 8, whereas a pipe piece 16 as shown in figure 6 is suitable for installation in horizontal parts of a drainpipe 4, such as for example in a horizontal part of a connecting pipe 10 further away from the opening 3 in the roof 2.

An advantage of an installation close to the roof 2 is that the component 13 is more easily accessible and thus makes any inspection and maintenance, as well as adjusting the adjustment means 33, simpler.

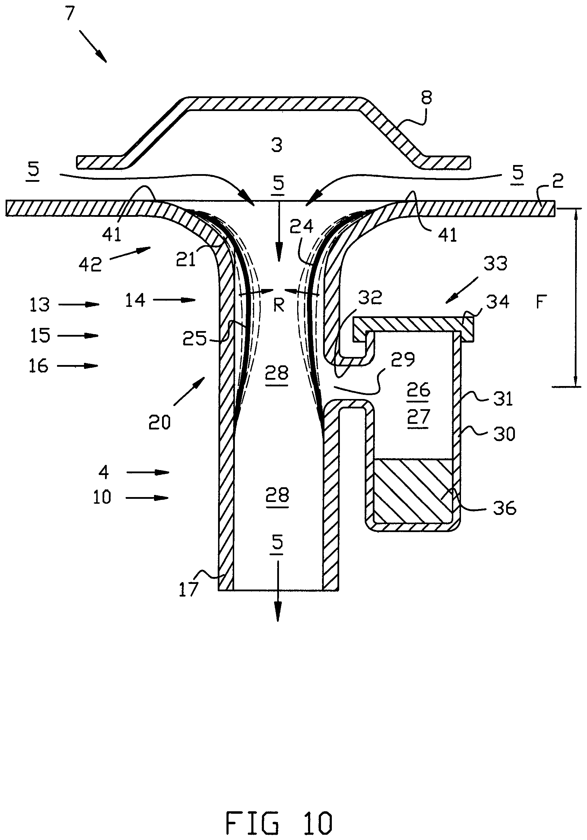

Figure 10 builds on this idea and the membrane 21 of the control means 14 is installed even closer to the opening 3 in the roof 2, whereby it no longer extends centrally or symmetrically over the opening 29 towards the hollow space 27 in the control vessel 31, which was the case in the previous embodiment of figure 9.

More specifically in this case the membrane 21 extends to near the edges 41 at the opening 3 in the roof 2, where the membrane 21 is attached to a part of the system for the drainage of rainwater in underpressure 7 which forms a roof duct 42 or roof drain 8.

To make this possible, the component according to the invention 13 must thus also comprise a part of a roof duct 42 or a roof drain 8 in which the control means 14, in this case the membrane 21, are also integrated.

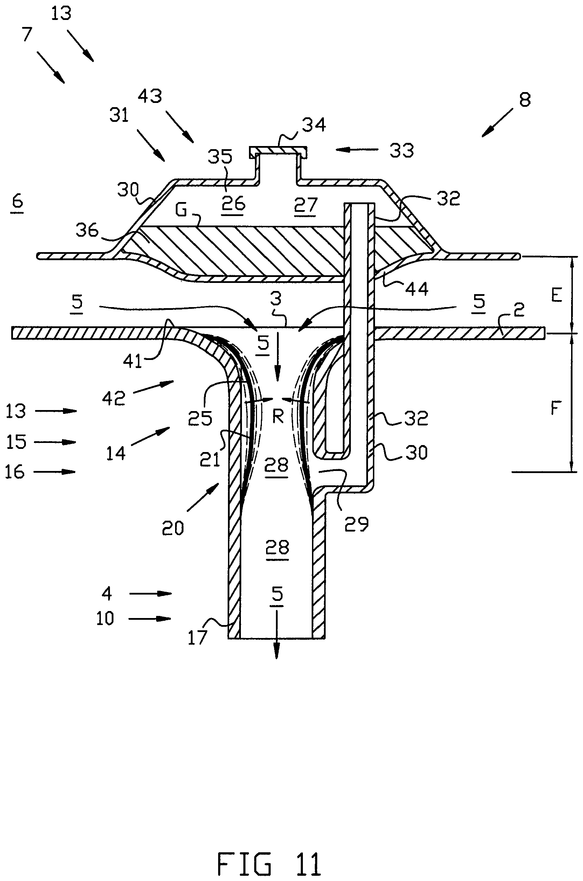

In the embodiment of figure 11 a further integration of the control means 14 in the roof drain 8 or roof duct 41 has been realised, whereby in this case the control vessel 31 is integrated in an air shutoff member 43 of the roof drain 8 which forms a kind of cover provided at some distance E above the roof 2 in order to avoid the supply of air 6 to the drainpipe 4.

The wall section 30 which also delimits the hollow, closed space 27 is partially part of this air shutoff member 43.

Another part of the wall section 30 which encloses the hollow space 27 constitutes the channel 32 to the control vessel 31.

The opening 29 in the drainpipe 4 or the pipe piece 16, and which is covered by the membrane 21, is provided at a distance F under the roof 2 in the pipe piece 16 or the drainpipe 4, just as in the preceding cases of the figures 9 and 10.

In this embodiment of figure 11 the channel 32 extends from this opening 29 into the air shutoff member 43, more specifically through the bottom 44 thereof to above the level G of a liquid medium 36 which is possibly present in the control vessel 31.

In this case both a pipe piece 16 and a part of a roof duct 42 or roof drain 8 are part of the component 13 according to the invention.

It is clear that adjusting the condition in the hollow, closed space 27 in this embodiment is even easier than with the preceding embodiments, as the cover 34 of the control vessel 31 is a cover 34 of the air shutoff member 43 which is accessible from the roof 2 without any problem.

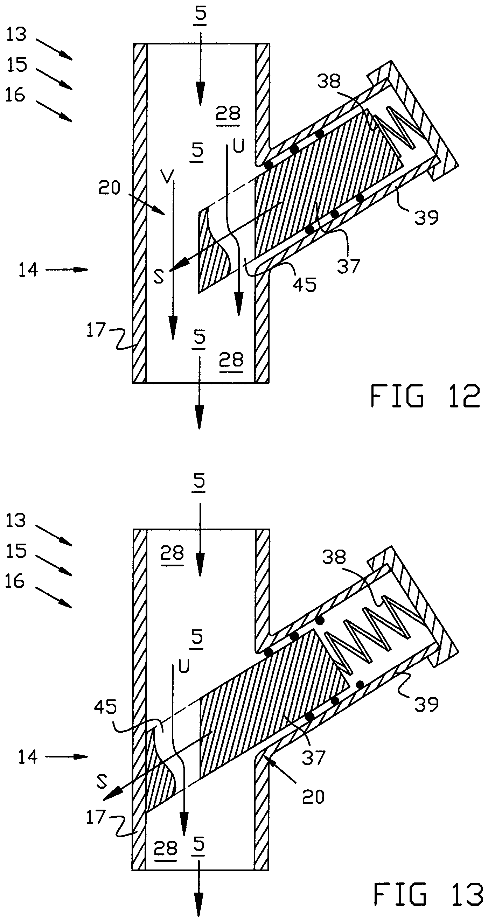

Figures 12 and 13 show yet another embodiment of a component according to the invention 13, whereby this time the control means 14 do not control the flow rate through a drainpipe 4 as a function of the underpressure ΔP, but whereby the control means 14 are directly controlled by the flow speed or the flow rate of the rainwater 5 through the drainpipe 4.

In the shown example, the component 13 is again made as a pipe piece 16 whereby the control means 14 are formed by a piston 37 which can move backward and forward in a cylindrical tube piece 8, just as in the examples of figures 7 and 8.

The piston 37 is hereby provided with a channel 45 for drained away rainwater 5 to flow through during operation.

The lateral position of the piston 37 in the cylindrical tube piece 38 and/or the shape of the channel 45 are hereby determined during operation by the flow-through speed of the drained away rainwater 5 through this channel 45 in the piston 37.

Figure 12 shows a first position of the piston 37 and shape of the channel 45 at atmospheric pressure, whereby the piston 37 is partially retracted.

Figure 13 shows a position whereby the piston 37 has moved more to the flow-through opening 28 according to the arrow S.

This embodiment of the figures 12 and 13 has a number of drawbacks and is therefore not a preferred solution, but the example indicates that the control means 14 cannot only be controlled by an underpressure, but also by the flow-through speed of rainwater 5 through the component 13, even when there is no underpressure yet.

That is possible because the control means 14 have a certain shape, whereby more specifically the control means 14 are formed by the channel 45 in the piston 37 which has a curved shape or wave shape which forms an obstruction in the flow-through opening 28.

A drawback of this embodiment in relation to the preceding embodiments is that in rest mode, i.e. the absence of an underpressure in the component 13, there is already an obstruction with accompanying narrowing in the flow-through opening 28, formed by a part of the piston 37 and the channel 45.

In this rest mode the rainwater 5 can flow through the wave-shaped or curved channel 45 in the piston 37, indicated by arrow U, and along the piston 37 according to a straightforward route indicated with arrow V.

The obstruction formed by the wave-shaped channel 45 in the piston 37 can in this condition ensure by its curved or waving design that running, falling water, free falling under atmospheric pressure can already develop a reaction force on the piston 37, such that it can already start moving according to the arrow S and make the flow-through opening 28 even narrower, and this still before the component according to the invention 13 is in underpressure.

A movement of the piston 37 in the direction of the arrow S reaches its maximum when the piston 37 is extended against the cylindrical wall 17 opposite the tube piece 39.

From that moment the flow-through opening 28 is narrowed to the opening formed by the wave-shaped channel 45 and there is no further narrowing of the flow-through opening 28 with greater underpressures.

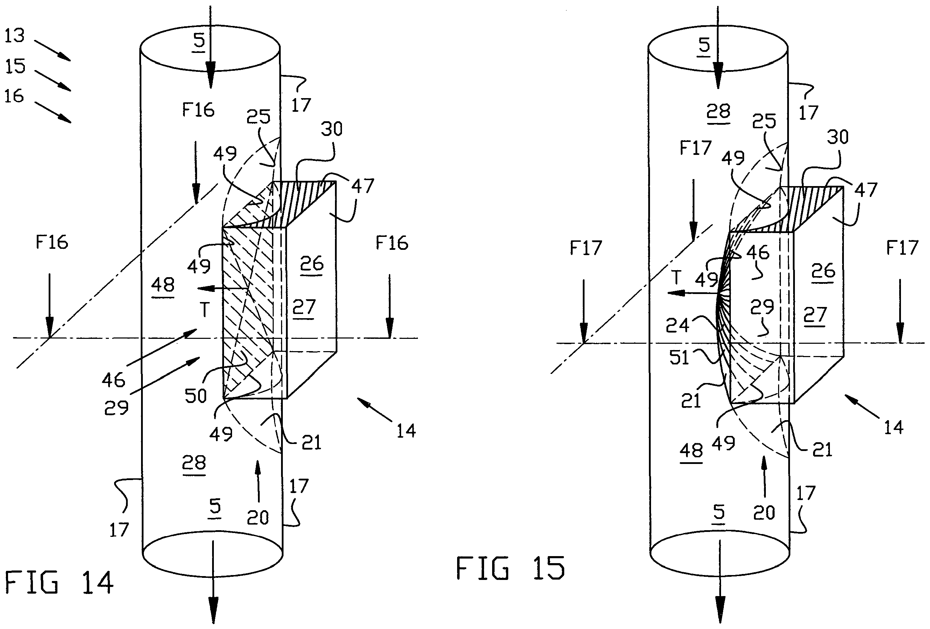

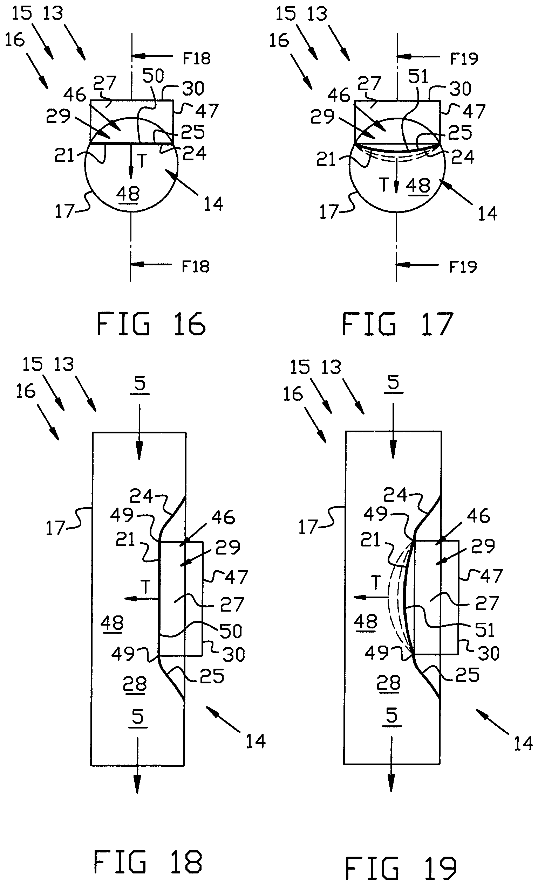

Figures 14 to 19 show an alternative embodiment which shows similarities with the embodiments with membrane 21 of the figures 5 and 6.

In this case the opening 29 on the wall section 30 covered by the membrane is a rectangular opening 46.

Such rectangular shape of the opening 29 has the advantage that a flat membrane 21 can easily be stretched over it, whereby it is guaranteed that the membrane 21 remains tight during operation.

In this embodiment the wall section 30 is formed by a beam-shaped insert 47 which is partly sunk into the cylindrical wall 17 of the pipe piece 16.

The rectangular opening 46 is provided in the beam-shaped insert 47 toward the inside 48 of the pipe piece 16.

The membrane 21 covers this rectangular opening 46 and extends further over the edges 49 of the rectangular opening 46 up to the cylindrical wall 17 of the pipe piece 16.

On the level of this cylindrical wall 17, the membrane is connected with this cylindrical wall 17 of the pipe piece 16, in order to achieve a smooth transition between the cylindrical wall 17 of the pipe piece 17 and the edges 49 of the rectangular opening 46 in the insert 47.

Thus, a smooth flow through the pipe piece 16 is ensured, despite the beam shape of the insert 47 sunk into the cylindrical wall 17.

Figures 14, 16 and 18 show the condition of the membrane 21 when there is no underpressure ΔP in the pipe piece 16.

In this condition the membrane 21 is flat and it extends in the plane 50 of the rectangular opening 46.

As is shown in the figures 15, 17 and 19, the membrane 21 deforms when the underpressure ΔP increases into a spherical surface 51 in the direction of the arrow T toward the inside 48 of the pipe piece 16. The result is that the flow-through opening 28 gets smaller and the flow rate through the pipe piece 16 is reduced.

In the event of a drop of the underpressure ΔP, exactly the opposite occurs.

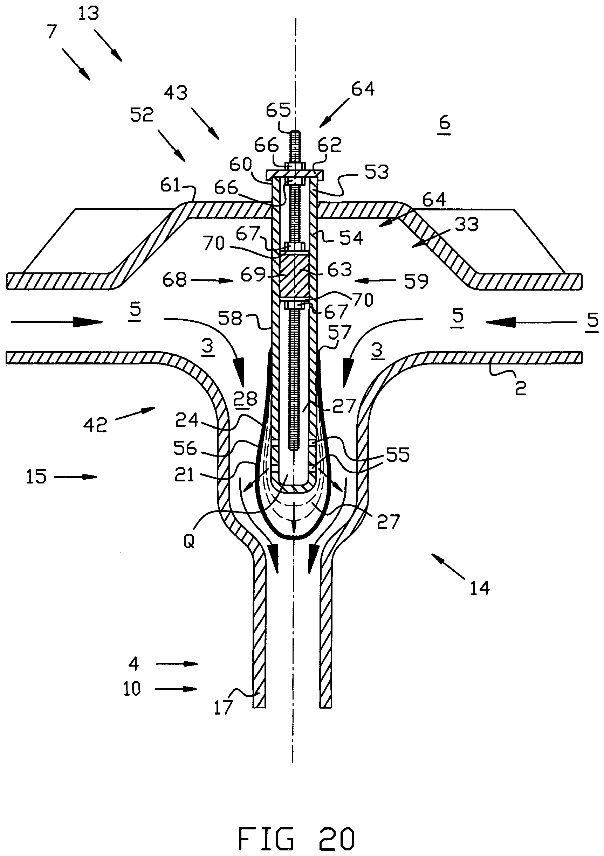

And finally, based on figure 20 another possible embodiment is discussed here of a component 13 according to the invention which this time is made entirely as a roof drain 8, or even more precisely as an air shutoff member 43 of such roof drain 8, of a system for the drainage of rainwater in underpressure 7.

The air shutoff member 43 is made as a cover 52 whereby, to form a hollow, closed space 27, centrally in the cover 52, a hollow, sealable tube 53 is provided which extends perpendicular to the cover 52.

Several passages 55 are provided in the tube wall 54 of the hollow, sealable tube 53.

Furthermore, over the hollow tube 53 a balloon-shaped membrane 56 is applied which at its edges 57 is hermetically connected with the outside 58 of the tube wall 54.

The balloon-shaped membrane 56 covers said passages 55 and by creating an underpressure ΔP on the contact side 24 of the membrane 56 in relation to the pressure O in the hollow, closed space 27, the balloon-shaped membrane 56 can blow up to increase the volume of the hollow space 27.

Increase and decrease of this underpressure ΔP result in an increase and decrease respectively of the volume taken up by the balloon-shaped membrane 56.

The intention is that the balloon-shaped membrane 56 with the hollow tube 53 extends under the cover 52 into the opening 3 of the roof 2 and thus into the part concerned of the drainpipe 4.

Accordingly, the volume taken up by the balloon-shaped membrane 56 determines the dimensions of the flow-through opening 28 of the drainpipe 4 and thus the extent to which rainwater 5 can flow through this drainpipe 4.

The component 13 according to the embodiment of figure 20 is also provided with adjustment means 33 with which the condition in the closed, hollow space 27 can be adjusted.

In this case these adjustment means 33 are made as a movable part 59 with which the volume of the hollow, closed space 27 can be changed.

To this end the hollow tube 53 extends through the cover 52 of the roof drain 8, whereby the hollow tube 53 at the free end 60 that extends above the top 61 of the air shutoff valve 43 is provided with a sealable cover 62.

In this case the movable part 59 is a plug 63 which is provided in the hollow tube 53 and via the positioning means 64 is movable up and down in the hollow tube 53 to a desired position.

In this case these positioning means 64 are formed by a threaded rod 65 and screws 66 and 67, with which the plug 63 can be positioned in a certain position on the threaded rod 65.

The plug 63 is also provided with sealing means 68 with which the plug 63 can be put in a sealed and non-sealed condition.

More specifically the plug 63 with the sealing means 68 can be put in a sealing condition whereby the plug 63 on the level of said desired position completely, hermetically seals the passage n the hollow tube 53.

Reversely, the plug 63 with the sealing means 68 can be put in a non-sealing condition whereby the plug 63 is loose in the hollow tube 53 to allow the plug 63 to be moved to another position with the positioning means 64.

In this case, the plug 63 is made as a rubber element 69 which is mounted over the threaded rod 65 and which on either side is provided with a screw 67 and a washer 70 to form the sealing means 68, whereby by screwing the screws 67 toward each other the rubber element 69 expands and the plug 63 is thus put in a sealing condition.

The present invention is by no means limited to the embodiments described as an example of component 13 according to the invention of a system for the drainage of rainwater in underpressure 7, as well as of a pipe piece 16 and a roof drain 8 according to the invention which form such a component 13, but such components 13, such pipe pieces 16 and such drains 8 can be made in all kinds of other forms and dimensions without departing from the scope of the invention, as defined by the appended claims.

## Claims

1. Component (13) of a system for the drainage of rainwater in underpressure (7), **characterised in that** the component (13) is provided with control means (14) suitable to control the flow rate through a drainpipe (4) of the system for the drainage of rainwater in underpressure (7), wherein the component (13) itself comprises at least a part of a drainpipe (4) or pipe piece (16), wherein the component (13) optionally comprises a part of a roof drain (8), which roof drain (8) comprises an air shutoff member (43), wherein the control means (14) are integrated partially or entirely in said part of a drainpipe (4) or pipe piece (16) and/or partially or entirely in a part of said roof drain (8), whereby the control means (14) are such that they allow the flow rate through said part of the drainpipe (4) or pipe piece (16) concerned to be increasingly reduced as and when an underpressure (ΔP) in said part of the drainpipe (4) or pipe piece (16) concerned becomes greater and/or as and when the flow speed in said part of the drainpipe (4) or pipe piece (16) increases and vice versa, and whereby the control means (14) comprise at least one movable or deformable control element (20) intended to come into direct contact during operation with the drained away rainwater (5) and whereby a movement or deformation of the control element (20) which determines its position is the direct consequence of this contact with the drained away rainwater (5).

2. Component (13) according to claim 1, **characterised in that** the control means (14) allow the flow rate through the drainpipe (4) concerned to be changed by changing the dimensions of the flow-through opening (28) of the drainpipe concerned (4) or of a supply thereof or by changing the shape of this flow-through opening (28).

3. Component (13) according to claim 1 or 2, **characterised in that** the at least one movable or deformable control element (20) is essentially formed by at least one of the following elements:
- a movable flap;
- a movable sheet;
- a membrane (21, 56);
- an elastic deformable element (21,56); or,
- a piston (37) in a cylinder (38).

4. Component (13) according to one or several of the preceding claims, **characterised in that** said control element (20) is essentially formed by a deformable or elastic membrane (21, 56) which covers and hermetically seals an opening (29) or cavity (22) in a wall section (30), whereby a contact side (24) of the membrane (21, 56) during operation is intended to come into contact with the drained away rainwater (5) and the other side (25) of the membrane (21, 56) is in contact with a medium (26, 35, 36) that is present in a hollow, enclosed space (27) which is delimited by the membrane (21, 56) and said wall section (30).

5. Component (13) according to claim 4, **characterised in that** said wall section (30) is at least partially part of the wall (17) of a drainpipe (4) of the system for the drainage of rainwater in underpressure (7) concerned.

6. Component (13) according to claim 4 or 5, **characterised in that** said wall section (30) is at least partially part of an air shutoff member (43) of a roof drain (8) of the system for the drainage of rainwater in underpressure (7) concerned.

7. Component (13) according to one or several of the claims 4 to 6, **characterised in that** adjustment means (33) are provided with which the condition in said hollow, closed space (27) can be adjusted.

8. Component (13) according to claim 7, **characterised in that** the adjustment means (33) contain at least one of the following elements:
- a movable part (59) with which the volume of the hollow, closed space can be changed;
- means to change the pressure in the hollow, closed part (27); and/or,
- means (34) which allow medium (26, 35, 36) in the hollow space (27) to be added or removed.

9. Component (13) according to claim 7 or 8, **characterised in that** the adjustment means (33) comprise a sealable cover (34) which provides access to the hollow, closed space (27) for adding or removing medium (26, 35, 36), either in gaseous, liquid or solid form, in order to adjust the initial condition in the hollow, closed space (27), more specifically when an atmospheric pressure (P) prevails on the contact side (24) of the membrane (21, 56).

10. Component (13) according to one or several of the claims 4 to 9, **characterised in that** the opening (29) on the wall section (30) which is covered by the membrane (21, 56) is a rectangular opening (46).

11. Component (13) according to claim 10, **characterised in that** the wall section (30) is formed by a beam-shaped insert (47) which is partly sunk into the cylindrical wall (17) of a pipe piece (16) of the system for the drainage of rainwater in underpressure (7) concerned whereby the rectangular opening (46) is provided in the beam-shaped insert (47) toward the inside (48) of the pipe piece (16) that is covered by the membrane (21) and whereby the membrane (21) extends over the edges (49) of this rectangular opening (46) up to the cylindrical wall (17) of the pipe piece (16) where it is connected with the cylindrical wall (17) of the pipe piece (16), in order to realise a smooth transition between the cylindrical wall (17) of the pipe piece (16) and the edges (49) of the rectangular opening (46) in the insert (47) whereby a smooth flow through the pipe piece (16) is ensured.

12. Component (13) according to one or several of claims 1 to 3, **characterised in that** said control element (20) is essentially formed by a piston (37) which can move backward and forward in a cylindrical tube piece (38) which extends laterally on the wall (17) of a pipe piece (16) of the system for the drainage of rainwater in underpressure (7) concerned and whereby the head (40) or a part near the head (40) of the piston (37) is intended to come into contact with the drained away rainwater (5) during operation.

13. Component (13) according to claim 12, **characterised in that** the piston (37) is spring-loaded and mounted in the cylindrical tube piece (38).

14. Component (13) according to claim 12 or 13, **characterised in that** in the piston (37) a channel (45) is provided for rainwater (5) to flow through during operation whereby the lateral position of the piston (37) in the cylindrical tube piece (38) or the shape of the channel (45) during operation is determined by the flow-through speed of the drained away rainwater (5) through this channel (45) in the piston (37).

15. Component (13) according to one or several of the preceding claims, **characterised in that** the control means (14) comprise one or several of the following elements:
- a measuring instrument to measure the flow rate through a drainpipe or a roof drain of the system for the drainage of rainwater in underpressure concerned;
- a measuring instrument to measure the underpressure in a drainpipe or a roof drain of the system for the drainage of rainwater in underpressure concerned;
- an electronic control unit to manage the control means as a function of measurements made with a measuring instrument in a drainpipe or a roof drain of the system for the drainage of rainwater in underpressure concerned; and/or,
- an actuator to change the flow-through opening of a drainpipe of the system for the drainage of rainwater in underpressure concerned or of the flow-through opening of a supply thereof.

16. Pipe piece (16) that forms a component (13) of a system for the drainage of rainwater in underpressure (7) according to one or several of claims 1 to 11 or 15, **characterised in that** it has a pipe wall (30) in which a passage, opening (29) or cavity (22) is provided which on the inside (48) of the pipe piece (16) is hermetically covered by a membrane (21) to form said control means (14) and whereby a wall section (30) connects to the passage or opening (29) or whereby a wall section (19, 30) forms the cavity, such that this wall section (19, 30) together with the membrane (21) encloses a hollow, closed space (27) .

17. Roof drain(8) which forms a component of a system for the drainage of rainwater in underpressure (7) according to one or several of the claims 1 to 11 or 15, **characterised in that** the roof drain(8) contains an air shutoff member (43) in the form of a cover (52) whereby, to form a hollow, closed space (27), centrally in the cover (52) a hollow, sealable tube (53) is provided which extends perpendicular to the cover (52), whereby in the tube wall (54) one or several passages (55) are provided, whereby over the hollow tube (53) a balloon-shaped membrane is applied which on the edges is hermetically (56) connected with the outside (58) of the tube wall (54), whereby the membrane (56) covers said passage or passages (55) and whereby by creating an underpressure (ΔP) outside the membrane (56) in relation to the pressure (Q) in the hollow closed space (27), the balloon-shaped membrane (56) can blow up to increase the volume of the hollow space (27).

18. Roof drain (8) according to claim 17, **characterised in that** the hollow tube (53) extends through the cover (52) of the roof drain(8), whereby the hollow tube (53) on the free end (60) that extends above the top (61) of the cover (52) is provided with a sealable cover (62).

19. Roof drain (8) according to claim 17 or 18, **characterised in that** in the hollow tube (53) a plug (63) is provided which can be moved via positioning means (64) up and down in the hollow tube (53) to a desired position and whereby this plug (63) is also provided with sealing means (68) with which the plug (63) can be put in both a sealing and non-sealing condition, whereby more specifically on the level of said position the passage in the hollow tube (53) is completely, hermetically sealed or conversely the plug (63) is loose in the hollow tube (53) to allow the plug (63) to possibly be moved to another position with the positioning means (64).

## Patentansprüche

1. Komponente (13) eines Systems für den Abfluss von Regenwasser in Unterdruck (7), **dadurch gekennzeichnet, dass** die Komponente (13) mit Steuermitteln (14) versehen ist, die geeignet sind, um die Durchflussrate durch ein Abflussrohr (4) des Systems für den Abfluss von Regenwasser in Unterdruck (7) zu steuern, wobei die Komponente (13) selbst wenigstens einen Teil eines Abflussrohrs (4) oder Rohrstücks (16) umfasst, wobei die Komponente (13) optional einen Teil eines Dachabflusses (8) umfasst, wobei der Dachabfluss (8) ein Luftabsperrelement (43) umfasst, wobei die Steuermittel (14) teilweise oder vollständig in dem Teil eines Abflussrohrs (4) oder Rohrstücks (16) und/oder teilweise oder vollständig in einem Teil des Dachabflusses (8) integriert sind, wodurch die Steuermittel (14) derart beschaffen sind, dass sie ermöglichen, dass die Durchflussrate durch den Teil des betreffenden Abflussrohrs (4) oder Rohrstücks (16) zunehmend verringert wird während und wenn ein Unterdruck (ΔP) in dem Teil des betreffenden Abflussrohrs (4) oder Rohrstücks (16) größer wird und/oder während und wenn die Durchflussgeschwindigkeit in dem Teil des Abflussrohrs (4) oder Rohrstücks (16) zunimmt und umgekehrt, und wodurch die Steuermittel (14) wenigstens ein bewegbares oder verformbares Steuerelement (20) umfassen, das bestimmt ist, um während des Betriebs in direkter Berührung mit dem abgeflossenen Regenwasser (5) zu kommen und wodurch eine Bewegung oder Verformung des Steuerelements (20), das seine Position bestimmt, die unmittelbare Folge dieser Berührung mit dem abgeflossenen Regenwasser (5) ist.

2. Komponente (13) nach Anspruch 1, **dadurch gekennzeichnet, dass** die Steuermittel (14) ermöglichen, dass die Durchflussrate durch das betreffende Abflussrohr (4) durch Ändern der Abmessungen der Durchflussöffnung (28) des betreffenden Abflussrohrs (4) oder einer Zuführung davon oder durch Ändern der Form dieser Durchflussöffnung (28) geändert wird.

3. Komponente (13) nach Anspruch 1 oder 2, **dadurch gekennzeichnet, dass** das wenigstens eine bewegbare oder verformbare Steuerelement (20) im Wesentlichen durch wenigstens eines der folgenden Elemente ausgebildet ist:
- eine bewegbare Klappe;
- ein bewegbares Blatt;
- eine Membran (21, 56);
- ein elastisch verformbares Element (21, 56); oder
- einen Kolben (37) in einem Zylinder (38).

4. Komponente (13) nach einem oder mehreren der vorhergehenden Ansprüche, **dadurch gekennzeichnet, dass** das Steuerelement (20) im Wesentlichen durch eine verformbare oder elastische Membran (21, 56) ausgebildet ist, die eine Öffnung (29) oder einen Hohlraum (22) in einem Wandabschnitt (30) abdeckt und hermetisch versiegelt, wodurch eine Berührungsseite (24) der Membran (21, 56) während des Betriebs bestimmt ist, um mit dem abgeflossenen Regenwasser (5) in Berührung zu kommen und die andere Seite (25) der Membran (21, 56) mit einem Medium (26, 35, 36) in Berührung steht, das in einem hohlem, umschlossenen Raum (27) vorhanden ist, der durch die Membran (21, 56) und den Wandabschnitt (30) begrenzt ist.

5. Komponente (13) nach Anspruch 4, **dadurch gekennzeichnet, dass** der Wandabschnitt (30) wenigstens teilweise Teil der Wand (17) eines Abflussrohrs (4) des betreffenden Systems für den Abfluss von Regenwasser in Unterdruck (7) ist.

6. Komponente (13) nach Anspruch 4 oder 5, **dadurch gekennzeichnet, dass** der Wandabschnitt (30) wenigstens teilweise Teil eines Luftabsperrelements (43) eines Dachabflusses (8) des betreffenden Systems für den Abfluss von Regenwasser in Unterdruck (7) ist.

7. Komponente (13) nach einem oder mehreren der Ansprüche 4 bis 6, **dadurch gekennzeichnet, dass** Einstellmittel (33) bereitgestellt sind, mit denen der Zustand in dem hohlen, geschlossenen Raum (27) einstellbar ist.

8. Komponente (13) nach Anspruch 7, **dadurch gekennzeichnet, dass** die Einstellmittel (33) wenigstens eines der folgenden Elemente enthalten:
- einen bewegbaren Teil (59), mit dem das Volumen des hohlen, geschlossenen Raums geändert werden kann;
- Mittel zum Ändern des Drucks in dem hohlen, geschlossenen Teil (27); und/oder,
- Mittel (34), die es ermöglichen, Medium (26, 35, 36) in dem hohlen Raum (27) hinzuzufügen oder zu entfernen.

9. Komponente (13) nach Anspruch 7 oder 8, **dadurch gekennzeichnet, dass** die Einstellmittel (33) eine versiegelbare Abdeckung (34) umfassen, die den Zugang zu dem hohlen, geschlossenen Raum (27) zum Hinzufügen oder Entfernen von Medium (26, 35, 36) bereitstellt, entweder in gasförmiger, flüssiger oder fester Form, um den Ausgangszustand in dem hohlen, geschlossenen Raum (27) einzustellen, speziell dann, wenn an der Berührungsseite (24) der Membran (21, 56) ein atmosphärischer Druck (P) herrscht.

10. Komponente (13) nach einem oder mehreren der Ansprüche 4 bis 9, **dadurch gekennzeichnet, dass** die Öffnung (29) an dem Wandabschnitt (30), der durch die Membran (21, 56) abgedeckt ist, eine rechteckige Öffnung (46) ist.

11. Komponente (13) nach Anspruch 10, **dadurch gekennzeichnet, dass** der Wandabschnitt (30) durch einen balkenförmigen Einsatz (47) ausgebildet ist, der teilweise in die zylindrische Wand (17) eines Rohrstücks (16) des betreffenden Systems für den Abfluss von Regenwasser in Unterdruck (7) eingelassen ist, wodurch die rechteckige Öffnung (46) in dem balkenförmigen Einsatz (47) zu der Innenseite (48) des Rohrstücks (16) hin bereitgestellt ist, das durch die Membran (21) abgedeckt ist und wodurch sich die Membran (21) über die Ränder (49) dieser rechteckigen Öffnung (46) bis zu der zylindrischen Wand (17) des Rohrstücks (16) erstreckt, wo sie mit der zylindrischen Wand (17) des Rohrstücks (16) verbunden ist, um einen glatten Übergang zwischen der zylindrischen Wand (17) des Rohrstücks (16) und den Rändern (4, 9) der rechteckigen Öffnung (46) in dem Einsatz (47) zu realisieren, wodurch ein glatter Durchfluss durch das Rohrstück (16) gewährleistet ist.

12. Komponente (13) nach einem oder mehreren der Ansprüche 1 bis 3, **dadurch gekennzeichnet, dass** das Steuerelement (20) im Wesentlichen durch einen Kolben (37) ausgebildet ist, der in einem zylindrischen Kanalstück (30) vor- und zurückbewegbar ist, das sich an der Wand (17) eines Rohrstücks (16) des betreffenden Systems für den Abfluss von Regenwasser in Unterdruck (7) seitlich erstreckt und wodurch der Kopf (40) oder ein Teil nahe dem Kopf (40) des Kolbens (37) bestimmt ist, während des Betriebs mit dem abgeflossenen Regenwasser (5) in Berührung zu kommen.

13. Komponente (13) nach Anspruch 12, **dadurch gekennzeichnet, dass** der Kolben (37) federbelastet und in dem zylindrischen Kanalstück (38) montiert ist.

14. Komponente (13) nach Anspruch 12 oder 13, **dadurch gekennzeichnet, dass** in dem Kolben (37) ein Tunnel (45) zum Durchströmen von Regenwasser (5) während des Betriebs bereitgestellt ist, wodurch die seitliche Stellung des Kolbens (37) in der zylindrischen Kanalstück (38) oder die Form des Tunnels (45) während des Betriebs durch die Durchflussgeschwindigkeit des abgeflossenen Regenwassers (5) durch diesen Tunnel (45) in dem Kolben (37) bestimmt wird.

15. Komponente (13) nach einem oder mehreren der vorhergehenden Ansprüche, **dadurch gekennzeichnet, dass** die Steuermittel (14) ein oder mehrere der folgenden Elemente umfassen:
- ein Messinstrument, um die Durchflussrate durch ein Abflussrohr oder einen Dachabfluss des betreffenden Systems für den Abfluss von Regenwasser in Unterdruck zu messen;
- ein Messinstrument, um den Unterdruck in einem Abflussrohr oder einem Dachabfluss des betreffenden Systems für den Abfluss von Regenwasser in Unterdruck zu messen;
- eine elektronische Steuereinheit, um die Steuermittel in Abhängigkeit von Messungen zu verwalten, die mit einem Messinstrument in einem Abflussrohr oder einem Dachabfluss des betreffenden Systems für den Abfluss von Regenwasser bei Unterdruck durchgeführt werden; und/oder,
- ein Betätigungselement, um die Durchflussöffnung eines Abflussrohrs des betreffenden Systems für den Abfluss von Regenwasser in Unterdruck oder der Durchflussöffnung einer Zuführung davon zu ändern.

16. Rohrstück (16), das eine Komponente (13) eines Systems für den Abfluss von Regenwasser in Unterdruck (7) nach einem oder mehreren der Ansprüche 1 bis 11 oder 15 ausbildet, **dadurch gekennzeichnet, dass** es eine Rohrwand (30) aufweist, in der ein Durchgang, eine Öffnung (29) oder ein Hohlraum (22) bereitgestellt ist, der auf der Innenseite (48) des Rohrstücks (16) durch eine Membran (21) hermetisch abgedeckt ist, um die Steuermittel (14) auszubilden, und wodurch ein Wandabschnitt (30) mit dem Durchgang oder der Öffnung (29) verbindet oder wodurch ein Wandabschnitt (19, 30) den Hohlraum derart ausbildet, dass dieser Wandabschnitt (19, 30) zusammen mit der Membran (21) einen hohlen, geschlossenen Raum umschließt (27).

17. Dachabfluss (8), der eine Komponente eines Systems für den Abfluss von Regenwasser in Unterdruck (7) nach einem oder mehreren der Ansprüche 1 bis 11 oder 15 ausbildet, **dadurch gekennzeichnet, dass** der Dachabfluss (8) ein Luftabsperrelement (43) in der Form einer Abdeckung (52) enthält, wodurch, um einen hohlen, geschlossenen Raum (27) auszubilden, mittig in der Abdeckung (52) ein hohler, versiegelbarer Kanal (53) bereitgestellt ist, der sich senkrecht zu der Abdeckung (52) erstreckt, wodurch in der Kanalwand (54) ein oder mehrere Durchgänge (55) bereitgestellt sind, wodurch über dem hohlen Kanal (53) eine ballonförmige Membran aufgebracht ist, die an den Rändern mit der Außenseite (58) der Kanalwand (54) hermetisch (56) verbunden ist, wodurch die Membran (56) den Durchgang oder die Durchgänge (55) abdeckt und wodurch durch Erzeugen eines Unterdrucks (ΔP) außerhalb der Membran (56) in Bezug auf den Druck (Q) in dem hohlen, geschlossen Raum (27), die ballonförmige Membran (56) aufgeblasen werden kann, um das Volumen des hohlen Raums (27) zu vergrößern.

18. Dachabfluss (8) nach Anspruch 17, **dadurch gekennzeichnet, dass** sich der hohle Kanal (53) durch die Abdeckung (52) des Dachabflusses (8) erstreckt, wodurch der hohle Kanal (53) an dem freien Ende (60), das sich oberhalb der Oberseite (61) der Abdeckung (52) erstreckt, mit einer versiegelbaren Abdeckung (62) versehen ist.

19. Dachabfluss (8) nach Anspruch 17 oder 18, **dadurch gekennzeichnet, dass** in dem hohlen Kanal (53) ein Stopfen (63) bereitgestellt ist, der über Positioniermittel (64) auf und ab in dem hohlen Kanal (53) in eine gewünschte Position bewegt werden kann, und wodurch dieser Stopfen (63) ebenso mit Versiegelungsmitteln (68) versehen ist, mit denen der Stopfen (63) sowohl in einen versigelnden als auch in einen nicht versiegelnden Zustand gebracht werden kann, wodurch speziell auf dem Niveau der Position der Durchgang in dem hohlen Kanal (53) vollständig hermetisch versiegelt ist oder umgekehrt der Stopfen (63) lose in dem hohlen Kanal (53) liegt, um dem Stopfen (63) zu ermöglichen, möglicherweise mit den Positioniermitteln (64) in eine andere Position bewegt zu werden.

## Revendications

1. Composant (13) d'un système destiné au drainage de l'eau de pluie dans des conditions de dépression (7), **caractérisé en ce que** le composant (13) est équipé de moyens de réglage (14) qui sont appropriés pour régler le débit à travers un tuyau de drainage (4) du système destiné au drainage de l'eau de pluie dans des conditions de dépression (7), dans lequel le composant lui-même (13) comprend au moins une partie d'un tuyau de drainage (4) ou un élément de tuyau (16), dans lequel le composant (13) comprend de manière facultative une partie d'un drain de toiture (8), ledit drain de toiture (8) comprenant un élément qui fait office d'obturateur d'air (43), dans lequel les moyens de réglage (14) sont intégrés en partie ou en tout dans ladite partie d'un tuyau de drainage (4) ou dans un élément de tuyau (16) et/ou en partie ou en tout dans une partie dudit drain de toiture (8), dans lequel les moyens de réglage (14) sont tels qu'ils permettent de réduire de manière croissante le débit à travers ladite partie du tuyau de drainage (4) ou l'élément de tuyau (16) concerné au fur et à mesure de l'augmentation d'une dépression (ΔP) dans ladite partie du tuyau de drainage (4) ou de l'élément de tuyau (16) concerné et/ou au fur et à mesure que la vitesse d'écoulement dans ladite partie du tuyau de drainage (4) ou l'élément de tuyau (16) augmente et vice versa, et dans lequel les moyens de réglage (14) comprennent au moins un élément de réglage mobile ou déformable (20) qui est destiné à entrer en contact direct, au cours de la mise en exploitation, avec l'eau de pluie (5) qui a été éliminée par drainage, et dans lequel un mouvement ou une déformation de l'élément de réglage (20) qui détermine sa position représente la conséquence directe de ce contact avec l'eau de pluie (5) qui a été éliminée par drainage.

2. Composant (13) conformément à la revendication 1, **caractérisé en ce que** les moyens de réglage (14) permettent de modifier le débit à travers le tuyau de drainage (4) concerné via une modification des dimensions de l'ouverture de passage par écoulement (28) du tuyau de drainage concerné (4) ou d'une alimentation du débit en question ou via une modification de la configuration de cette ouverture de passage par écoulement (28).

3. Composant (13) conformément à la revendication 1 ou 2, **caractérisé en ce que** ledit au moins un élément de réglage mobile ou déformable (20) est essentiellement réalisé par le biais d'au moins un des éléments indiqués ci-après, à savoir :
- un clapet mobile ;
- une feuille mobile ;
- une membrane (21, 56) ;
- un élément élastiquement déformable (21, 56) ; ou
- un piston (37) dans un cylindre (38).

4. Composant (13) conformément à une ou plusieurs des revendications précédentes, **caractérisé en ce que** ledit élément de réglage (20) est réalisé de manière essentielle par l'intermédiaire d'une membrane déformable ou élastique (21, 56) qui recouvre et qui ferme de manière hermétique une ouverture (29) ou une cavité (22) dans un tronçon de paroi (30), dans lequel un côté faisant contact (24) de la membrane (21, 56) au cours de la mise en exploitation est destiné à entrer en contact avec l'eau de pluie (5) qui a été éliminée par drainage et l'autre côté (25) de la membrane (21, 56) est en contact avec un milieu (26, 35, 36) qui est présent dans un espace creux fermé (27) qui est délimité par la membrane (21, 56) et par ledit tronçon de paroi (30).

5. Composant (13) conformément à la revendication 4, **caractérisé en ce que** ledit tronçon de paroi (30) fait partie au moins partiellement de la paroi (17) d'un tuyau de drainage (4) du système concerné qui est destiné au drainage de l'eau de pluie dans des conditions de dépression (7).

6. Composant (13) conformément à la revendication 4 ou 5, **caractérisé en ce que** ledit tronçon de paroi (30) fait partie au moins partiellement d'un élément (43) qui fait office d'obturateur d'air d'un drain de toiture (8) du système concerné qui est destiné au drainage de l'eau de pluie dans des conditions de dépression (7).

7. Composant (13) conformément à une ou plusieurs des revendications 4 à 6, **caractérisé en ce que** l'on prévoit des moyens d'ajustement (33) avec lesquels on peut ajuster les conditions qui règnent dans ledit espace creux fermé (27).

8. Composant (13) conformément à la revendication 7, **caractérisé en ce que** les moyens d'ajustement (33) contiennent au moins un des éléments indiqués ci-après, à savoir :
- un élément mobile (59) avec lequel on peut modifier le volume de l'espace creux fermé ;
- des moyens qui sont destinés à modifier la pression qui règne dans la partie creuse fermée (27) ; et/ou
- des moyens (34) qui permettent d'ajouter un milieu (26, 35, 36) dans l'espace creux (27) ou de l'en retirer.

9. Composant (13) conformément à la revendication 7 ou 8, **caractérisé en ce que** les moyens d'ajustement (33) comprennent un couvercle qui peut être scellé (34) qui permet d'accéder à l'espace creux fermé (27) pour l'addition ou le retrait du milieu (26, 35, 36), que ce soit sous une forme gazeuse, liquide ou solide, dans le but d'ajuster l'état initial dans l'espace creux fermé (27), de manière plus spécifique lorsqu'une pression atmosphérique (P) prévaut sur le côté faisant contact (24) de la membrane (21, 56).

10. Composant (13) conformément à une ou plusieurs des revendications 4 à 9, **caractérisé en ce que** l'ouverture (29) dans le tronçon de paroi (30), qui est recouverte par la membrane (21, 56), représente une ouverture de forme rectangulaire (46).

11. Composant (13) conformément à la revendication 10, **caractérisé en ce que** le tronçon de paroi (30) est réalisé par l'intermédiaire d'une pièce rapportée (47) qui possède une configuration en forme de faisceau qui est enfoncé en partie dans la paroi de forme cylindrique (17) d'un élément de tuyau (16) du système concerné qui est destiné au drainage de l'eau de pluie dans des conditions de dépression (7), dans lequel l'ouverture de forme rectangulaire (46) est prévue dans la pièce rapportée (47) qui possède une configuration en forme de faisceau dans la direction du côté interne (48) de l'élément de tuyau (16) qui est recouvert par la membrane (21), et dans lequel la membrane (21) s'étend par-dessus les bords (49) de cette ouverture de forme rectangulaire (46) jusqu'à la paroi de forme cylindrique (17) de l'élément de tuyau (16) à l'endroit où il est raccordé à la paroi de forme cylindrique (17) de l'élément de tuyau (16) dans le but de mettre en oeuvre une transition sans à-coups entre la paroi de forme cylindrique (17) de l'élément de tuyau (16) et les bords (49) de l'ouverture de forme rectangulaire (46) dans la pièce rapportée (47), d'une manière telle que l'on garantit un écoulement régulier à travers l'élément de tuyau (16).

12. Composant (13) conformément à une ou plusieurs des revendications 1 à 3, **caractérisé en ce que** ledit élément de réglage (20) est réalisé de manière essentielle par l'intermédiaire d'un piston (37) qui peut effectuer des mouvements vers l'arrière et vers l'avant dans un élément tubulaire de forme cylindrique (38) qui s'étend dans la direction latérale sur la paroi (17) d'un élément de tuyau (16) du système concerné qui est destiné au drainage de l'eau de pluie dans des conditions de dépression (7) et dans lequel la tête (40) ou une partie proche de la tête (40) du piston (37) est destinée à entrer en contact avec l'eau de pluie (5) qui a été éliminée par drainage au cours de la mise en exploitation.

13. Composant (13) conformément à la revendication 12, **caractérisé en ce que** le piston (37) est chargé par un ressort et est monté dans l'élément tubulaire de forme cylindrique (38).

14. Composant (13) conformément à la revendication 12 ou 13, **caractérisé en ce que**, dans le piston (37), on prévoit un canal (45) à travers lequel l'eau de pluie (5) est destinée à s'écouler lors de la mise en exploitation, dans lequel la position latérale du piston (37) dans l'élément tubulaire de forme cylindrique (38) ou bien la configuration du canal (45) lors de la mise en exploitation est déterminée par la vitesse d'écoulement de l'eau de pluie qui a été éliminée par drainage (5) à travers ce canal (45) dans le piston (37).

15. Composant (13) conformément à une ou plusieurs des revendications précédentes, **caractérisé en ce que** les moyens de réglage (14) comprennent un ou plusieurs des éléments indiqués ci-après :
- un instrument de mesure qui est destiné à mesurer le débit à travers un tuyau de drainage ou un drain de toiture du système concerné qui est destiné au drainage de l'eau de pluie dans des conditions de dépression ;
- un instrument de mesure qui est destiné à mesurer la dépression qui règne dans un tuyau de drainage ou un drain de toiture du système concerné qui est destiné au drainage de l'eau de pluie dans des conditions de dépression ;
- une unité de commande électronique qui est destinée à gérer les moyens de réglage en fonction de mesures réalisées avec un instrument de mesure dans un tuyau de drainage ou dans un drain de toiture du système concerné qui est destiné au drainage de l'eau de pluie dans des conditions de dépression ; et/ou
- un actionneur qui est destiné à modifier l'ouverture de passage par écoulement d'un tuyau de drainage ou d'un drain de toiture du système concerné qui est destiné au drainage de l'eau de pluie dans des conditions de dépression ou de l'ouverture de passage par écoulement d'une alimentation de l'écoulement en question.

16. Élément de tuyau (16) qui forme un composant (13) d'un système (7) qui est destiné au drainage de l'eau de pluie dans des conditions de dépression conformément à une ou plusieurs des revendications 1 à 11 ou 15, **caractérisé en ce qu'**il possède une paroi de tuyau (30) dans laquelle on prévoit un passage, une ouverture (29) ou une cavité (22), qui, du côté interne (48) de l'élément de tuyau (16), est recouvert de manière hermétique par une membrane (21) afin d'obtenir lesdits moyens de réglage (14), et dans lequel un tronçon de paroi (30) est relié au passage ou à l'ouverture (29), ou dans lequel un tronçon de paroi (19, 30) forme la cavité, d'une manière telle que ce tronçon de paroi (19, 30), de manière conjointe avec la membrane (21), renferme un espace creux fermé (27).

17. Drain de toiture (8) qui forme un composant d'un système (7) qui est destiné au drainage de l'eau de pluie dans des conditions de dépression conformément à une ou plusieurs des revendications 1 à 11 ou 15, **caractérisé en ce que** le drain de toiture (8) contient un élément (43) qui fait office d'obturateur d'air, sous la forme d'un couvercle (52), dans lequel, dans le but d'obtenir un espace creux fermé (27), en position centrale dans le couvercle (52), on prévoit un tube creux (53) qui peut être fermé de manière étanche, qui s'étend en direction perpendiculaire par rapport au couvercle (52), dans lequel, dans la paroi tubulaire (54), on prévoit un ou plusieurs passages (55), dans lequel, par-dessus le tube creux (53), on applique une membrane qui possède une configuration en forme de ballon qui, sur ses bords, est reliée dans des conditions hermétiques (56) au côté externe (58) de la paroi tubulaire (54), dans lequel la membrane (56) recouvre ledit ou lesdits passage(s) (55), et dans lequel, en créant une dépression (ΔP) du côté externe de la membrane (56) par rapport à la pression (Q) qui règne dans l'espace creux fermé (27), la membrane (56) qui possède une configuration en forme de ballon a la possibilité de gonfler dans le but d'augmenter le volume de l'espace creux (27).

18. Drain de toiture (8) conformément à la revendication 17, **caractérisé en ce que** le tube creux (53) s'étend à travers le couvercle (52) du drain de toiture (8), dans lequel le tube creux (53), à son extrémité libre (60) qui s'étend au-dessus de la partie supérieure (61) du couvercle (52), est équipé d'un recouvrement (62) qui peut être scellé.

19. Drain de toiture (8) conformément à la revendication 17 ou 18, **caractérisé en ce que**, dans le tube creux (53), on prévoit un bouchon (63) qui peut être soumis à un déplacement par l'intermédiaire d'un moyen de positionnement (64) de bas en haut et vice versa dans le tube creux (53) dans le but d'atteindre une position désirée, et dans lequel ce bouchon (63) est également équipé d'un moyen d'étanchéisation (68) avec lequel le bouchon (63) peut être mis à la fois dans un état d'étanchéisation et de non étanchéisation, dans lequel, de manière plus spécifique, au niveau de ladite position, le passage dans le tube creux (53) est complètement fermé de manière hermétique ou, à l'inverse, le bouchon (63) n'est pas fixé dans le tube creux (53) pour permettre au bouchon (63) de se déplacer le cas échéant pour prendre une autre position par l'intermédiaire du moyen de positionnement (64).
